Europäisches Patentamt

European Patent Office

Office européen des brevets

(19)

(11) EP 0 735 387 A1

(12) ## DEMANDE DE BREVET EUROPEEN

(43) Date de publication:
02.10.1996 Bulletin 1996/40

(51) Int Cl.$^6$: **G02B 5/08**, B32B 3/12, C04B 38/00

(21) Numéro de dépôt: 96450005.2

(22) Date de dépôt: 26.03.1996

(84) Etats contractants désignés:
**BE DE ES GB IT NL**

(30) Priorité: **29.03.1995 FR 9503984**

(71) Demandeur: **AEROSPATIALE Société Nationale Industrielle**
**75781 Paris Cédex 16 (FR)**

(72) Inventeurs:
- **Chenier, Jean-Pascal**
**33320 Le Taillan Medoc (FR)**

- **Rousseau, Gérard**
**33160 Saint Aubin de Medoc (FR)**
- **Boursereau, Frédéric**
**33110 Le Bouscat (FR)**

(74) Mandataire: **Thébault, Jean-Louis**
**Cabinet Thébault S.A.**
**1 Allées de Chartres**
**33000 Bordeaux (FR)**

(54) **Procédé d'élaboration d'une structure allegée en SiC, du type sandwich à âme en nid d'abeilles et structure ainsi obtenue**

(57) -L'objet de l'invention est un procédé d'élaboration d'une structure allégée en SiC, notamment pour la fabrication d'un miroir allégé, avec les étapes suivantes:

. découpe, d'une préforme à structure en nid d'abeilles, dont les voiles sont à matrice organique et renfort fibreux,

. pyrolyse de cette préforme à structure en nid d'abeilles pour conserver le seul carbone,

. siliciuration du carbone de la préforme pour obtenir une âme en SiC microporeux,

. renforcement par dépôt chimique de SiC en phase vapeur, du type infiltrant, des voiles de la structure en nid d'abeilles de l'âme,

. réalisation d'une nappe du type feutre, et assemblage sur au moins une face de l'âme de la nappe ainsi réalisée, et densification de cette nappe pour obtenir au moins une peau en SiC à la surface de l'âme.

- L'invention concerne également la structure obtenue.

FIG.2

EP 0 735 387 A1

## Description

La présente invention a pour objet un procédé de réalisation d'une structure céramique du type sandwich en nid d'abeilles, notamment pour la réalisation de miroirs allégés de grandes dimensions, ainsi que la structure céramique ainsi obtenue.

De nombreux télescopes ont été envoyés dans l'espace, portés par des satellites pour des domaines d'application très variés. De tels télescopes ont un miroir en verre massif afin de répondre aux contraintes de l'espace, essentiellement mécaniques et thermiques, tout en conférant à la partie miroir la meilleure qualité optique conduisant aux plus hautes performances.

Le verre est bien connu pour:

- sa stabilité dimensionnelle due à son très faible coefficient de dilatation,
- sa capacité à être coulé suivant une forme donnée,
- sa capacité à être poli,
- ses qualités mécaniques.

Le verre présente néanmoins un inconvénient particulièrement important pour des applications spatiales : son poids.

On sait que tout poids supplémentaire nécessite une poussée supplémentaire pour la mise en orbite, ce qui conduit à des surcoûts très importants.

De plus, une fois en orbite, le poids reste préjudiciable car il faut une motorisation de puissance proportionnelle à la masse et il faut combattre les effets engendrés par l'inertie, effets qui limitent la précision.

En outre, la fragilité du verre, notamment au montage mais plus généralement lors des différentes phases d'usinage est un inconvénient tout aussi important.

L'industrie spatiale et les industries connexes qui utilisent les mêmes techniques, notamment l'aéronautique, sont à la recherche d'une structure qui présente des caractéristiques mécaniques de très haute valeur, notamment une très grande raideur, ainsi qu'un coefficient de dilatation très faible et un poids le plus réduit possible.

De plus, pour certaines applications, il est nécessaire que le matériau utilisé soit résistant à l'oxydation à très haute température, de l'ordre de 1600°C, sans que ses qualités mécaniques soient sensiblement altérées à ces températures.

Le carbure de Silicium, SiC, est un des quelques matériaux de haute technologie qui présente des propriétés compatibles avec ce cahier des charges très spécifique et rigoureux puisque sa densité est faible, d=3,25, son module d'élasticité longitudinale est élevé, E=600 Gpa, son coefficient de dilatation thermique est faible $\alpha=4.10^{-6}$ °C$^{-1}$ et son coefficient de conductibilité thermique est suffisamment élevé pour les applications envisagées, $\lambda = 200$ W/m.°K.

De plus, le SiC est insensible aux rayonnements émis dans un synchrotron, un cyclotron ou dans les lasers de forte puissance, grâce à son faible numéro atomique, si bien qu'il peut également trouver une utilisation dans de telles applications en tant que miroir déviant.

D'autres applications peuvent être envisagées avec ce type de structure céramique à base de SiC et plus particulièrement avec le procédé selon l'invention, parmi lesquelles on peut citer non seulement les miroirs très allégés à grande stabilité dimensionnelle mais aussi les écrans thermiques d'aéronefs, les écrans pare-feu d'aéronefs, les échangeurs thermiques ou les supports de catalyseurs.

On sait également que dans les systèmes optiques cryogéniques, l'effet de masse thermique est réduit par l'utilisation de SiC, si bien que cela facilite le refroidissement du miroir et son maintien à la bonne température.

De nombreuses techniques ont été mises au point pour réaliser des structures en SiC, mais de nombreuses difficultés limitent les possibilités d'allégement des produits ainsi fabriqués. La taille et la forme sont également soumises à des contraintes de réalisation.

On connaît par la demande de brevet PCT/US 88/07688 un miroir allégé réalisé à partir de SiC et un procédé de fabrication de ce miroir.

Le miroir ainsi décrit comprend une préforme en mousse de SiC, réalisée à partir de mousse de polyuréthane, découpée au profil recherché, de laquelle on élimine tous les hétéroatomes sauf le carbone. On dépose sur cette préforme du SiC par toute méthode adaptée afin d'obtenir un bloc poreux de SiC, monolithique, qui est densifié par le dépôt d'une fine couche de SiC en surface afin de conférer à la surface une bonne capacité d'accrochage.

Le bloc ainsi obtenu est usiné pour lui donner la planéité ou la courbure souhaitée. Les faces ainsi usinées reçoivent une couche mince de SiC par dépôt chimique en phase vapeur, couche qui vient renforcer la résistance mécanique du bloc et qui peut être polie pour conférer à la surface des qualités optiques.

Un tel bloc présente néanmoins une trop faible résistance pour certaines applications dans lesquelles les contraintes mécaniques sont élevées et les dimensions sont réduites, si bien que les qualités, notamment de résistance mécanique, d'un bloc en SiC à structure mousse sont trop faibles. On peut aussi imaginer que la pénétration de SiC dans un bloc de mousse de forte épaisseur pose des problèmes.

Le but de l'invention est de proposer un procédé de fabrication d'une structure en SiC, notamment pour la réalisation de miroirs allégés, comprenant une âme en nid d'abeilles également en SiC ainsi que la structure obtenue par ce procédé.

La structure ainsi obtenue est en forme et aux dimensions recherchées, d'une très grande rigidité mécanique, y compris à très haute température, elle présente une excellente résistance à l'oxydation, elle est d'un poids réduit, compatible avec les applications envisagées notamment spatiales et aéronautiques, elle est usinable et ses faces peuvent recevoir une couche destinée à être polie, en vue de lui conférer des qualités optiques, elle peut aussi comporter des inserts localisés en vue de recevoir des pièces rapportées, notamment des pièces fixations mécaniques.

A cet effet, l'invention a pour objet un procédé d'élaboration d'une structure en céramique SiC, notamment un miroir allégé, qui se caractérise par la succession des étapes suivantes :

- découpe, suivant le profil à obtenir, d'une préforme à structure en nid d'abeilles, dont les voiles sont à matrice organique et à renfort fibreux, en prenant en compte les éventuels retraits,
- pyrolyse de cette préforme à structure en nid d'abeilles pour conserver le seul carbone, en gardant le profil initial,
- siliciuration du carbone de la préforme pour obtenir une âme en SiC microporeux,
- renforcement par dépôt chimique de SiC en phase vapeur, du type infiltrant, des voiles de la structure en nid d'abeilles,
- réalisation d'une nappe du type feutre, assemblage sur au moins une face de l'âme de la nappe réalisée, operculant ainsi les alvéoles et densification de cette nappe pour obtenir des peaux en SiC à la surface de l'âme pour former une structure en SiC.

Selon l'invention, la réalisation de la nappe, l'assemblage avec operculation des alvéoles et la densification sont réalisées par la succession des étapes suivantes :

- mise en place d'un feutre aiguilleté en fibres courtes de carbone "ex-rayonne", sur chacune des faces de l'âme,
- rigidification et liaison dudit feutre aux voiles des alvéoles par dépôt chimique de SiC, en phase vapeur, du type infiltrant,
- colmatage par une barbotine à base de SiC, de façon à diminuer en surface la porosité, et
- dépôt chimique de SiC, en phase vapeur du type infiltrant, avec une première phase, à cinétique lente, sur une faible épaisseur, destinée à densifier la couche de surface et une seconde phase, à cinétique plus rapide, sur une forte épaisseur de l'ordre de centaines de μ.

Dans le cadre de cette réalisation des peaux, chaque face de l'âme est plaquée, avec une pression suffisante sur la nappe en feutre pour que les voiles des alvéoles poinçonnent ce feutre sur une profondeur donnée, la nappe ainsi imprimée se logeant partiellement dans les alvéoles, en les operculant.

Selon une variante, le feutre est élaboré directement dans les alvéoles.

Selon une variante de réalisation de la structure céramique, l'invention prévoit les étapes suivantes :

- réalisation d'une nappe en feutre de whiskers en SiC, enrobées d'un liant organique, avec un faible taux volumique de fibres, de l'ordre de 5 à 20%, une faible quantité de liant de 3 à 15% en poids et une faible épaisseur de l'ordre du millimètre,
- découpe de portions de cette nappe en feutre de whiskers au profil des faces de l'âme à structure renforcée en nid d'abeilles et dépôt de ces portions découpées sur ces faces, avec un éventuel poinçonnage pour imprimer la nappe avec l'âme, ce qui constitue un sandwich,
- étuvage du sandwich ainsi réalisé en vue de polymériser le liant organique et de figer ce sandwich dans la forme souhaitée,
- pyrolyse du sandwich ainsi réalisé de façon à éliminer le liant organique,
- dépôt chimique de SiC, en phase vapeur, avec une cinétique lente en vue de l'assemblage des peaux sur l'âme et d'une prédensification, et
- dépôt chimique dense de SiC, en phase vapeur sur les peaux en fibres whiskers de SiC prédensifié, de façon à colmater et à renforcer mécaniquement le sandwich, ce qui conduit à la réalisation d'un semi-produit.

Plus particulièrement, le feutre de fibres de whiskers à orientations aléatoires est obtenu par la succession des étapes suivantes :

- mise en suspension des fibres whiskers de SiC dans une solution alcool éthylique/résine phénolique,
- floculation par adjonction d'eau à la solution, avec agitation permanente du mélange, et
- filtration sur un tamis à mailles fines des flocs de fibres whiskers de façon à obtenir une nappe de fibres de whiskers orientées aléatoirement.

Dans ce cas, lors de la filtration, l'âme renforcée à structure en nid d'abeilles peut être disposée sur le tamis afin de réaliser in situ, pour la première face uniquement, la nappe de feutre de fibres de whiskers directement dans les alvéoles, au sein de chacune desquelles s'accumulent les flocs.

Un mode de polymérisation consiste à étuver l'âme et les peaux mises dans une vessie, elle-même mise en dépression durant la polymérisation.

L'invention concerne également un procédé d'élaboration d'un semi-produit muni d'inserts de façon à recevoir une fixation en vue du montage de ce semi-produit sur un bâti sur lequel il doit être rapporté, en réalisant les étapes suivantes :

- renforcement de l'âme en nid d'abeilles, dans la zone située au droit des points de fixation prévus, par introduction par poinçonnage découpant de feutre, par exemple à base de fibres de carbone "ex-rayonne", dans les alvéoles correspondantes, les voiles des alvéoles servant de poinçon; cette zone formant un insert,

- mise en place éventuelle d'une pièce de réception au droit de l'insert, avant l'assemblage et la densification des peaux, rigidification par dépôt chimique en phase vapeur de SiC, au droit des zones renforcées, colmatage avec une barbotine à base de SiC, afin de diminuer la porosité de la surface du feutre et d'assurer le collage de la pièce de réception, et
- assemblage et densification des peaux,
- usinage du sandwich au droit de l'insert pour la mise en place de la fixation ou pour le montage de la fixation dans la pièce de réception,
- dépôt chimique en phase vapeur de SiC, afin de former une peau étanche à la surface du feutre et pour enrober la zone périphérique de la fixation montée dans l'insert, avec un éventuel colmatage préalable à la barbotine.

Selon un perfectionnement, le pourtour du produit est soumis à un dépôt chimique en phase vapeur de SiC, afin de réaliser une ceinture périphérique étanche et renforcée afin de servir également de support de fixation.

L'invention a également pour objet le semi-produit céramique obtenu par la mise en oeuvre du procédé selon l'invention qui comprend un sandwich avec une âme en nid d'abeilles, en SiC et deux peaux, également en SiC.

Le procédé selon l'invention est décrit ci-après selon un mode principal de réalisation accompagné de ses variantes, en regard des dessins qui illustrent un mode de réalisation particulier ainsi que des variantes de réalisation, dessins sur lesquels :

- les figures 1a à 1e représentent les diverses étapes de fabrication de l'âme selon l'invention,
- la figure 2 représente une vue en perspective d'une coupe de l'âme obtenue par le procédé selon l'invention, et
- les figures 3a et 3b représentent les deux phases de l'étape de poinçonnage imprimant du feutre par l'âme.

Le procédé de fabrication d'une structure céramique en SiC, constituant un semi-produit, selon la présente invention comprend essentiellement les étapes suivantes :

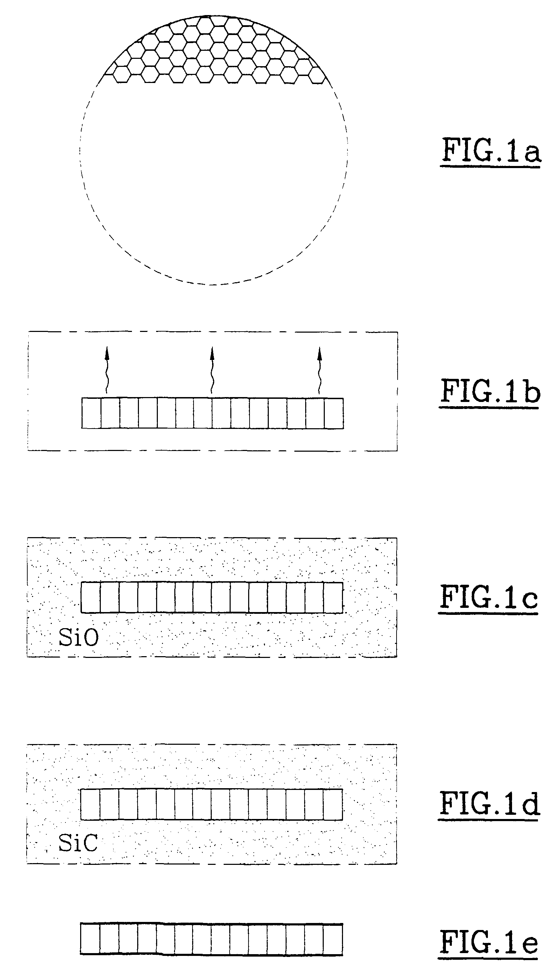

1. découpe, au profil du support à obtenir, d'une préforme à structure en nid d'abeilles dont les voiles sont à matrice organique et à renfort fibreux, en tenant compte des retraits éventuels (figure 1a);
2. pyrolyse de la préforme afin de transformer la matière organique en carbone (figure 1b);
3. siliciuration à haute température du carbone par du monoxyde de silicium gazeux ou du silicium afin d'obtenir une âme en SiC à structure en nid d'abeilles (figure 1c);
4. dépôt chimique en phase vapeur de SiC dense sur les voiles de la structure en nid d'abeilles de l'âme en SiC (figure 1d - figure 2);
5. élaboration de peaux en SiC sur les faces de l'âme (figure 1e).

On va maintenant décrire un mode de réalisation particulier du procédé selon l'invention. Les numéros qui suivent, correspondent aux étapes ci-dessus résumées et qui sont maintenant détaillées :

1/ Le matériau organique à structure en nid d'abeilles est un matériau du commerce.
On peut choisir un composite à fibres aramide tissées ou non-tissées avec une matrice en résine phénolique ou un composite à fibres de carbone tissées avec une matrice en résine phénolique. Le matériau est découpé aux formes et aux dimensions de la structure à obtenir en tenant compte du retrait éventuel : c'est la préforme.
2/ La préforme obtenue est pyrolisée sous atmosphère neutre pour éviter toute oxydation, à une température compatible avec la composition résine phénolique/fibres aramide, supérieure à 700°C.
Au cours de cette pyrolyse, afin d'éviter toute déformation éventuelle, la préforme est maintenue par un outillage adaptée, notamment afin de conserver à la préforme sa planéité .
La préforme est aux formes et dimensions finales, aux usinages de rectification de reprise près, ainsi que cela sera décrit ultérieurement.
Suivant la nature de la préforme composite, l'âme obtenue est du type carbone vitreux lorsqu'il s'agit de fibres aramide et du type fibres de carbone/matrice en carbone vitreux lorsque le matériau de départ comprend des fibres de carbone, ainsi qu'indiqué ci-avant.
3/ La nature chimique de la préforme ainsi obtenue est ensuite modifiée pour la transformer en SiC.
Il est recouru aux techniques de siliciuration connues qui consistent à faire réagir le carbone vitreux avec du monoxyde de Silicium gazeux (SiO) ou du Silicium (Si) qui transforme ce carbone vitreux en SiC microporeux, la réaction étant :

$$SiO + 2C \rightarrow SiC + CO \nearrow$$

ou

$$Si + C \rightarrow SiC$$

4/ L'âme en SiC microporeux à structure en nid d'abeilles est très fragile, car le taux de porosité des voiles des alvéoles est très important.

Un dépôt chimique en phase vapeur de SiC dense, proche de la densité nominale, de l'ordre de d=3,2 sur les voiles permet de renforcer les caractéristiques mécaniques de l'âme en SiC à structure en nid d'abeilles, le dépôt conduisant plus spécifiquement à une "infiltration". L'épaisseur de la couche du dépôt ainsi que cela va être décrit est très régulière et l'homme de l'art est à même de calculer l'épaisseur des voiles en fonction de l'application envisagée, connaissant tous les paramètres dimensionnels du nid d'abeilles.

Le procédé consiste en un craquage, c'est-à-dire une décomposition à haute température entre 800 et 1200°C, du méthyle trichlorosilane $CH_3 SiCl_3$ sous hydrogène. Les conditions de température, les pressions partielles des gaz réactifs en présence et la pression totale, les débits du mélange gazeux seront fonction des dimensions de la structure et suivant les dimensions des pores.

Un tel dépôt de renfort est parfaitement lié à l'âme au lieu d'être un simple revêtement superficiel, si bien que la résistance aux chocs thermiques et aux érosions mécaniques est excellente.

L'âme obtenue est en SiC à structure en nid d'abeilles, à résistance mécanique renforcée.

5/ Il convient maintenant d'élaborer, à partir de cette âme, une structure du type sandwich dont la résistance mécanique est tout autre. Cette structure comprend sur les faces de l'âme deux peaux réalisées et liées de façon intime avec ladite âme.

Deux options sont proposées pour réaliser ces peaux :

a/ à partir d'un matériau composite carbone/SiC et
b/ à partir d'un matériau composite SiC/SiC

a/ on utilise un feutre aiguilleté à partir de fibres courtes de carbone "ex-rayonne" dont le coefficient de dilatation est proche de celui du SiC. L'épaisseur varie de 1 à 5 mm.

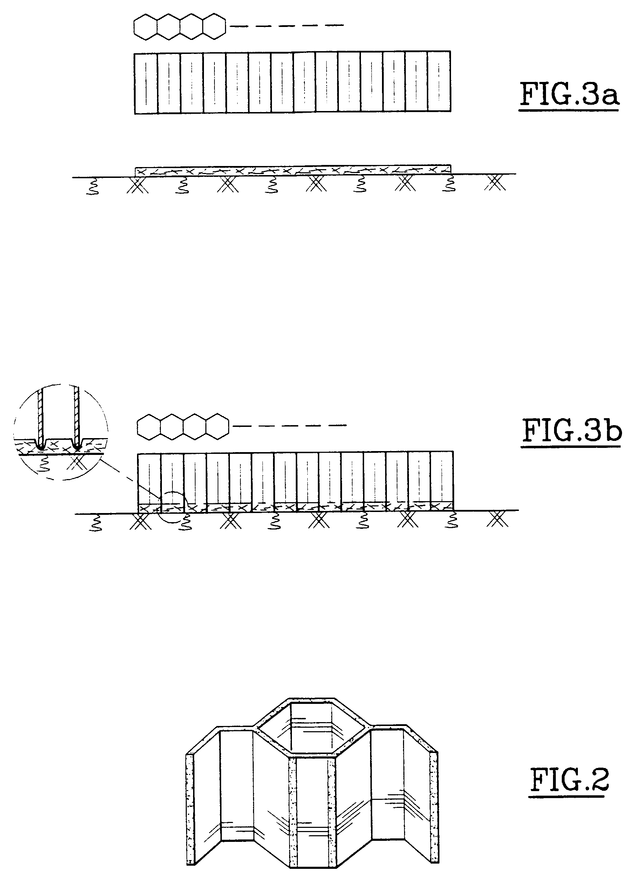

Ainsi que décrit sur les figures 3a et 3b, le feutre carbone aiguilleté est disposé sur une enclume plane et l'âme en SiC, en nid d'abeilles renforcée mécaniquement, est utilisée comme un poinçon imprimant, les faces ouvertes des alvéoles de la première face, orientées en vis à vis dudit feutre aiguilleté (figure 3a).

Puis le feutre est imprimé lorsque l'âme est pressée sur ledit feutre, chaque alvéole marquant le feutre au droit de l'ouverture de l'alvéole donnant sur la première face (figure 3b).

On retourne l'âme, on dispose une nouvelle surface de feutre de carbone aiguilleté et on opercule, de la même façon, l'ouverture de chaque alvéole donnant sur la seconde face.

Un nouveau dépôt chimique en phase vapeur de SiC, du type infiltrant, est réalisé de façon identique, aux adaptations près des paramètres, à celle de l'étape 4 de renforcement des voiles.

La couche est de très faible épaisseur afin de rigidifier le feutre de carbone et de le lier aux voiles des alvéoles, pour les parties poinçonnées.

Les faces pleines ainsi obtenues sont enduites d'une couche de barbotine épaisse, de poudre de SiC ou de whiskers de SiC, ce qui diminue la porosité de ces faces pleines.

Un dépôt chimique en phase vapeur est réalisé sur les deux faces. Le dépôt est dans un premier temps du type infiltrant avec une cinétique de dépôt lente qui densifie les faces pleines et diminue la porosité. Dans un second temps, la cinétique de dépôt est accélérée pour déposer une couche épaisse de plusieurs centaines de μ de SiC dense, ce qui confère aux peaux obtenues à la fois la résistance mécanique nécessaire pour obtenir un semi-produit en SiC à structure avec âme en nid d'abeilles SiC, et peaux en SiC et la capacité à recevoir un polissage;

Selon une variante, on réalise le feutre aiguilleté en fibres de carbone, in situ, directement dans les alvéoles de l'âme en SiC à structure en nid d'abeilles, à résistance mécanique renforcée. Ce mode de réalisation est décrit dans le brevet FR-A-2.525.963 au nom du demandeur, brevet auquel il convient de se reporter pour obtenir plus de détails sur la mise en oeuvre.

Les opérations de colmatage à la barbotine et les opérations suivantes restent inchangées.

b/ Réalisation à partir d'un matériau composite SiC/SiC.

Les fibres whiskers utilisées pour ce mode de réalisation préférentiel sont des monocristaux de SiC d'une longueur variant de 10 μ à 1000μ et d'un diamètre de 0,1 à 5 μ. Ces fibres whiskers sont mises en suspension dans une solution d'alcool éthylique avec de la résine phénolique, du type résole liquide. Le taux de whiskers doit rester faible pour obtenir une bonne dispersion des whiskers, ce taux étant inférieur à 10% et préférentiellement 5%. De l'eau est ajoutée afin de réaliser une floculation.

Une agitation mécanique puissante évite toute réagglomération. Les particules de résine se collent aux fibres whiskers et les fibres se collent entre elles pour former, par floculation sous l'effet de l'eau ajoutée, de petits amas de fibres whiskers orientés de façon aléatoire, c'est à dire des flocs.

Une filtration sous aspiration laisse passer la solution et retient les flocs de fibres de whiskers de cette suspension qui forment à la surface du tamis une nappe en feutre à fibres orientées aléatoirement, d'épaisseur régulière, au profil du tamis, ce profil étant considéré dans les trois dimensions.

Le taux volumique des fibres de whiskers est compris entre 5 et 20% et l'épaisseur d'environ 1 mm, pour donner un ordre d'idée.

La quantité de résine fixée aux fibres de whiskers est fonction du taux de résine au départ et de la quantité d'eau ajoutée pour la floculation. Les nappes en feutre sont découpées à l'état humide en pièces à la forme de chacune des faces de l'âme en nid d'abeilles, en SiC, à voiles renforcés.

L'âme est plaquée sur la pièce découpée correspondante, par pressage pour imprimer la structure débouchante des alvéoles du nid d'abeilles ; la pièce est ainsi assujettie à l'âme.

On retourne l'âme avec sa première peau et on procède de la même manière, les deux faces de l'âme étant ainsi operculées pour former des peaux.

L'ensemble de l'âme et des deux peaux ainsi positionnées est placé dans une vessie souple susceptible d'être mise en dépression ayant pour effet de maintenir les peaux plaquées sur l'âme. La mise en étuve de la vessie dans laquelle se trouvent l'âme et les peaux, à des températures de l'ordre de 170°C pour la résine phénolique, permet une polymérisation de la résine qui lie les fibres de whiskers du feutre assurant ainsi la cohésion mécanique des fibres entre elles et la liaison de chacune des peaux à l'âme, ce qui fige la géométrie du sandwich âme/peaux. Une pyrolyse de ce sandwich extrait de la vessie, à 900°C sous atmosphère neutre transforme la résine phénolique en carbone vitreux. Les peaux en feutre de fibres de whiskers SiC constituent un substrat très poreux, d'une grande surface spécifique et de faible épaisseur, qui est densifié par un dépôt chimique en phase vapeur de SiC. Cette opération assure également la liaison mécanique de chacune des peaux sur l'âme en nid d'abeilles à voiles renforcés.

En variante, on peut aussi placer l'âme en nid d'abeilles sur le tamis du filtre en faisant couler la suspension à travers le nid d'abeilles et les fibres de whiskers vont s'accumuler dans chaque alvéole, ce qui conduit à réaliser des feutres individuels par alvéole pour la première face. Pour la seconde face, il faut nécessairement réaliser un feutre indépendamment.

On obtient ainsi un semi-produit prêt à être usiné et à recevoir des dépôts complémentaires pour l'obtention d'un structure céramique fonctionnelle en fonction de l'application, notamment pour la réalisation d'un miroir.

Ce semi-produit nécessite par ailleurs des moyens de fixation/montage notamment lorsque l'application concerne les miroirs allégés et qu'il faut les fixer sur un bâti support.

Il convient tout d'abord de prévoir de rapporter des inserts c'est à dire des zones renforcées dans la structure en nid d'abeilles, afin qu'ils puissent recevoir des fixations prévues pour être solidaires du bâti sur lequel ledit semi-produit doit être installé.

A cet effet, pour réaliser des inserts au droit des points de fixation prévus, préalablement à la réalisation, à l'assemblage et à la densification des peaux, on remplie les alvéoles de l'âme en nid d'abeilles avec un feutre connu, par exemple en carbone à fibres ex-rayonne, identique à celui utilisé pour la réalisation d'une peau carbone/SiC selon l'étape 5a.

Ce remplissage est réalisé par poinçonnage découpant d'une nappe en feutre, les voiles des alvéoles servant de poinçon découpant.

De façon concomitante à cette étape, on peut éventuellement mettre en place une pièce de réception future d'une pièce de fixation, au droit de l'insert, avant l'assemblage et la densification des peaux.

On procède ensuite à une éventuelle rigidification par dépôt chimique en phase vapeur de SiC, au droit des zones renforcées, colmatage avec une barbotine à base de SiC, afin de diminuer la porosité de la surface du feutre et d'assurer le collage de la pièce de réception.

On peut ensuite assembler et densifier les peaux, ainsi que cela a été préalablement décrit.

Le sandwich est usiné au droit de l'insert pour la mise en place de la pièce de fixation directement dans ledit insert ou la peau seule est usinée pour permettre l'accès à la pièce de réception et le montage de la pièce de fixation dans cette pièce de réception.

En fonction des besoins on peut alors compléter la mise en place par un dépôt chimique en phase vapeur de SiC, afin de former une peau étanche et pour enrober la zone périphérique de la fixation montée dans l'insert, avec un éventuel colmatage préalable à la barbotine.

Enfin, en vue éventuellement d'assurer une bonne finition de la structure céramique ainsi élaborée, une ceinture périphérique est réalisée de façon identique à celle de l'insert, par mise en place d'un feutre aiguilleté périphérique suivie d'une rigidification par dépôt chimique en phase vapeur de SiC, qui assure également la liaison entre cette ceinture en feutre aiguilleté et l'âme, précédé d'un colmatage par une barbotine épaisse de fibres whiskers de SiC ou de poudre de SiC, suivi d'un dépôt chimique en phase vapeur de SiC.

La tranche du sandwich est une zone privilégiée de mise en place d'inserts car les fixations sont ainsi situées en dehors des faces utiles du semi-produit.

Bien entendu, ce semi-produit peut recevoir ensuite sur l'une de ses faces au moins, un revêtement de finition qui est, dans le cas d'un miroir, une couche de matériau, par exemple du SiC qui est susceptible d'être poli pour présenter des caractéristiques optiques.

Une telle finition ne fait pas partie de la présente invention et de ce fait elle n'est pas décrite en détail.

On peut donc constater à la lecture de la description que le produit obtenu répond aux cahier des charges exposé en préambule puisque le produit obtenu est d'une grande stabilité dimensionnelle et géométrique. De plus il est d'une grande résistance mécanique grâce à sa structure en sandwich avec une âme en nid d'abeilles. On peut prévoir des inserts qui solutionnent les problèmes du montage sur un bâti, problèmes complexes dans le cas des miroirs en verre de l'art antérieur par exemple. En outre, il est aussi très résistant à l'abrasion et il conserve ses propriétés lorsqu'il est exposé à des températures élevées.

**Revendications**

1. Procédé d'élaboration d'une structure allégée en SiC, notamment pour la fabrication d'un miroir allégé, caractérisé en ce qu'il comprend les étapes suivantes :

   • découpe, suivant le profil à obtenir, d'une préforme à structure en nid d'abeilles, dont les voiles sont à matrice organique et renfort fibreux, en prenant en compte les éventuels retraits,
   • pyrolyse de cette préforme à structure en nid d'abeilles pour conserver le seul carbone, en gardant le profil initial,
   • siliciuration du carbone de la préforme pour obtenir une âme en SiC microporeux,
   • renforcement par dépôt chimique de SiC en phase vapeur, du type infiltrant, des voiles de la structure en nid d'abeilles de l'âme,
   • réalisation d'une nappe du type feutre, et assemblage sur au moins une face de l'âme de la nappe ainsi réalisée, operculant ainsi les alvéoles, et densification de cette nappe pour obtenir au moins une peau en SiC à la surface de l'âme pour former une structure en SiC.

2. Procédé d'élaboration d'une structure allégée en SiC selon la revendication 1, caractérisé en ce que l'assemblage de la nappe avec operculation des alvéoles de l'âme en nid d'abeilles et la densification sont réalisés par la succession des étapes suivantes :

   • mise en place d'un feutre aiguilleté en fibres courtes de carbone "ex-rayonne", sur chacune des faces de l'âme,
   • rigidification et liaison dudit feutre aux voiles des alvéoles par dépôt chimique de SiC, en phase vapeur, du type infiltrant,
   • colmatage par une barbotine à base de SiC, de façon à diminuer la porosité, et
   • dépôt chimique de SiC, en phase vapeur du type infiltrant, avec une première phase, à cinétique lente, sur une faible épaisseur et une seconde phase, à cinétique plus rapide, sur une forte épaisseur de l'ordre de centaines de µ.

3. Procédé d'élaboration d'une structure allégée en SiC selon la revendication 2, caractérisé en ce que chaque face de l'âme est plaquée, avec une pression suffisante sur la nappe en feutre pour que les voiles des alvéoles poinçonnent cette nappe avec une profondeur donnée, la nappe ainsi imprimée se logeant partiellement dans les alvéoles, en les operculant.

4. Procédé d'élaboration d'une structure selon la revendication 2, caractérisé en ce que le feutre est élaboré directement dans les alvéoles.

5. Procédé d'élaboration d'une structure allégée en SiC selon la revendication 1, caractérisé en ce que l'assemblage de la nappe avec operculation des alvéoles de l'âme en nid d'abeilles et la densification sont réalisés par la succession des étapes suivantes :

   • réalisation d'une nappe en feutre de whiskers en SiC, enrobées d'un liant organique, avec un faible taux volumique de fibres, de l'ordre de 5 à 20%, une faible quantité de liant de 3 à 15% en poids et une faible épaisseur de l'ordre du millimètre,
   • découpe de portions de cette nappe en feutre de whiskers au profil des faces de l'âme à structure renforcée en nid d'abeilles et dépôt de ces portions découpées sur ces faces, avec un éventuel poinçonnage pour imprimer la nappe avec l'âme, ce qui constitue un sandwich,
   • étuvage du sandwich ainsi réalisé en vue de polymériser le liant organique et de figer ce sandwich dans la forme souhaitée,
   • pyrolyse du sandwich ainsi réalisé de façon à éliminer le liant organique,
   • dépôt chimique de SiC, en phase vapeur, avec une cinétique lente en vue de l'assemblage des peaux sur l'âme et d'une prédensification, et
   • dépôt chimique dense de SiC, en phase vapeur sur les faces en fibres whiskers de SiC, de façon à colmater et à renforcer mécaniquement le sandwich, ce qui conduit à la réalisation d'un semi-produit.

6. Procédé d'élaboration d'une structure allégée en SiC selon la revendication 5, caractérisé en ce que la nappe en feutre de fibres de whiskers est obtenue par la succession des étapes suivantes :

   • mise en suspension des fibres whiskers de SiC dans une solution alcool éthylique/résine phénolique,
   • floculation par adjonction d'eau à la solution, avec agitation permanente du mélange, et
   • filtration sur un tamis à mailles fines des flocs de fibres whiskers de façon à obtenir une nappe de fibres de whiskers.

7. Procédé d'élaboration d'une structure allégée en SiC selon la revendication 5 et 6, caractérisé en ce que lors de la filtration, l'âme renforcée à structure en nid d'abeilles est disposée sur le tamis afin de réaliser in situ, pour la première face uniquement, le feutre de fibres de whiskers directement dans les alvéoles.

8. Procédé d'élaboration d'une structure allégée en SiC selon la revendication 5, 6 ou 7, caractérisé en ce que l'étuvage est réalisé par mise de l'âme et des peaux dans une vessie, elle-même mise en dépression durant la polymérisation.

9. Procédé d'élaboration d'une structure allégée en SiC selon l'une quelconque des revendications précédentes, caractérisé en ce que, en vue de la réalisation d'inserts de façon à recevoir une fixation en vue du montage de ce semi-produit sur un bâti sur lequel cette structure doit être rapportée, on réalise les étapes suivantes :

   • renforcement de l'âme en nid d'abeilles, dans la zone située au droit des points de fixation prévus, par introduction par poinçonnage découpant de feutre, par exemple à base de fibres "ex-rayonne" de fibres de carbone, dans les alvéoles correspondantes, les voiles des alvéoles servant de poinçon, cette zone formant un insert,
   • mise en place éventuelle d'une pièce de réception au droit de l'insert, avant l'assemblage et la densification des peaux, puis rigidification par dépôt chimique en phase vapeur de SiC, au droit des zones renforcées, colmatage avec une barbotine à base de SiC, afin de diminuer la porosité de la surface du feutre et d'assurer le collage de la pièce de réception, et assemblage et densification des peaux,
   • usinage du sandwich au droit de l'insert pour la mise en place de la fixation ou pour le montage de la fixation dans la pièce de réception,
   • éventuellement dépôt chimique en phase vapeur de SiC, afin de former une peau étanche et pour enrober la zone périphérique de la fixation montée dans l'insert, avec un éventuel colmatage préalable à la barbotine.

10. Structure céramique allégée en SiC obtenue par la mise en oeuvre de l'une quelconque des revendications précédentes, caractérisée en ce qu'elle comprend un sandwich avec une âme en en nid d'abeilles en SiC et deux peaux également en SiC.

FIG.1a

FIG.1b

FIG.1c

SiO

FIG.1d

SiC

FIG.1e

FIG.3a

FIG.3b

FIG.2

**EP 0 735 387 A1**

**Office européen des brevets**

**RAPPORT DE RECHERCHE EUROPEENNE**

Numero de la demande

EP 96 45 0005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | WO-A-88 07688 (HUGHES AIRCRAFT COMP.) * abrégé * --- | 1,10 | G02B5/08 B32B3/12 C04B38/00 |
| A | FR-A-2 630 831 (SFIM) * revendications * --- | 1 | |
| A | FR-A-2 609 179 (SFIM) * revendications * --- | 1 | |
| A | EP-A-0 543 752 (PECHINEY RECHERCHE) * revendication 8; exemple 4 * --- | 1 | |
| A | US-A-4 824 711 (D.E. CAGLIOSTRO ET AL.) --- | | |
| A | EP-A-0 477 505 (DORNIER GMBH) --- | | |
| A | DATABASE WPI Week 9017 Derwent Publications Ltd., London, GB; AN 90-129785 XP002008396 & JP-A-02 080 380 (MATSUSHITA ELEC IND KK, ET AL.) * abrégé * ----- | | **DOMAINES TECHNIQUES RECHERCHES (Int.Cl.6)** G02B B32B C04B |

Le présent rapport a été établi pour toutes les revendications

| Lieu de la recherche | Date d'achèvement de la recherche | Examinateur |
|---|---|---|
| LA HAYE | 15 Juillet 1996 | Daeleman, P |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\.............................................................................

& : membre de la même famille, document correspondant

EPO FORM 1503 03.82 (P04C02)

11